# EUROPÄISCHE PATENTSCHRIFT

(11) **EP 0 413 235 B1**
(45) Veröffentlichungstag und Bekanntmachung des Hinweises auf die Patenterteilung: **27.10.1993**
(21) Anmeldenummer: 90115123.3
(22) Anmeldetag: 07.08.1990
(51) Int. Cl.: F16B 7/18, E04B 1/58

(54) **Knotenpunktverbindung**
Junction point connection
Noeud d'assemblage

(30) Priorität: 16.08.1989 DE 3926979
(43) Veröffentlichungstag der Anmeldung: 20.02.1991
(73) Patentinhaber: GASSLER, Kurt, D-72820 Sonnenbühl (DE)
(72) Erfinder: GASSLER, Kurt, D-72820 Sonnenbühl (DE)
(74) Vertreter: Möbus, Rudolf, Dipl.-Ing.

(56) Entgegenhaltungen:
- DE-U- 8 712 119
- GB-A- 2 065 820

## Beschreibung

Die Erfindung betrifft eine Knotenpunktverbindung für leicht montierbare und demontierbare Gebäudeteile, beispielsweise Messebauten, mit einem Knotenkörper, der mindestens eine Lagernut mit einer verengten Öffnung aufweist, die teils in der einen und teils in der anderen von zwei miteinander verschraubbaren Knotenkörperscheiben ausgebildet ist, und mit in die Lagernut einsetzbaren und darin formschlüssig haltbaren Kupplungsteilen mit einem an den Lagernutquerschnitt angepaßten Profil.

Knotenpunktverbindungen mit den vorstehend genannten Merkmalen sind aus den DE-A-30 19 787 und DE-A-30 35 698 bekannt. Bei diesen Knotenpunktverbindungen sind die Kupplungsteile als Drehsteck-Verbindungsteile ausgebildet. Es handelt sich hierbei um kugelförmige Kupplungsteile mit seitlichen Abflachungen, die es erlauben, die Kupplungsteile in einer bestimmten Stellung durch die verengte Öffnung in die Lagernut einzubringen, wo sie dann durch Verdrehen in eine formschlüssige Verriegelungsstellung gebracht werden. Die bekannten Knotenpunktverbindungen haben also den Nachteil, daß bei der Montage oder Demontage die Knotenkörper mit dem verengten Öffnungsquerschnitt ihrer Lagernut und mit fertig miteinander verschraubten Knotenkörperscheiben vorliegen, so daß die Kupplungsteile zwangsläufig eine Form haben müssen, die ihr Drehen innerhalb der Lagernut erlaubt, was wiederum im Bereich der verengten Öffnung der Lagernut eine Verjüngung der Kupplungsteile erforderlich macht. Diese Verjüngungsstellen sind aber die Schwachpunkte der ganzen Verbindungskonstruktion. Diese Schwachstellen müssen so bemessen sein, daß sie die an den Gebäudeteilen auftretenden Belastungen aushalten können. Die Drehsteck-Verbindungsteile müssen einen entsprechend stärkeren Durchmesser aufweisen, was wiederum die Abmessungen des Knotenkörpers bestimmt und insgesamt zu Knotenpunktverbindungen führt, die einen relativ großen Raumbedarf mit überdimensionierten Knotenkörpern ergeben.

Der Erfindung liegt die Aufgabe zugrunde, eine Knotenpunktverbindung der eingangs genannten Art so auszubilden, daß überdimensionierte Knotenkörper entfallen können und Schwachstellen an den Kupplungsteilen vermeidbar sind.

Die gestellte Aufgabe wird mit einer Knotenpunktverbindung der eingangs genannten Art erfindungsgemäß dadurch gelöst, daß zwischen den einzelnen Knotenkörperscheiben Spreizfedern angeordnet sind, die beim Lockern der Schraubverbindung benachbarte Knotenkörperscheiben unter Aufweitung der von ihnen begrenzten Lagernut oder -nuten auseinanderdrücken und ein Einschieben der die formschlüssige Verbindung bewirkenden Kupplungsköpfe der Kupplungsteile erlauben.

Bei einer erfindungsgemäß ausgebildeten Knotenpunktverbindung liegen also bei der Montage Knotenkörper vor, deren Lagernut oder Lagernuten aufgeweitet sind, so daß Kupplungsteile mit größerer Stärke als der normalen Breite des Öffnungsquerschnittes der Lagernut eingesetzt werden können, bevor die Knotenkörperscheiben des Knotenkörpers unter Verengung der Lagernut auf ihren Endquerschnitt gegeneinander festgeschraubt werden. Dadurch müssen die Kupplungsteile keine Drehsteck-Verbindungsteile mehr sein. Sie können vorzugsweise in der Lagernutumfangsrichtung eine Länge haben, die größer ist als der größte Durchmesser des Lagernutquerschnittes, so daß ein wesentlich größerer Verbindungsquerschnitt der Kupplungsteile im Bereich der verengten Lagernutöffnung besteht, als dies bei den bekannten Drehsteck-Verbindungsteilen der Fall sein kann. Dementsprechend muß auch keine Überdimensionierung des Knotenkörpers erfolgen.

Die Schraubverbindung der Knotenkörperscheiben kann vorzugsweise einen Mutterkörper aufweisen, der in einer zentralen Ausnehmung von mindestens zwei benachbarten Knotenkörperscheiben angeordnet ist und in welchem mindestens eine Verbindungsschraube zum Zusammenhalten von mindestens zwei Knotenkörperscheiben verankerbar ist. Es versteht sich, daß bei dieser Konstruktion die Schraublänge der Verbindungsschrauben in dem Mutterkörper ausreichend groß gehalten ist, so daß sich beim Lockern der Verbindungsschraube(n) die Knotenkörperscheiben unter der Einwirkung der Spreizfedern ausreichend weit auseinanderbewegen können, ohne daß die Schraubverbindung vollständig gelöst wird und der Knotenkörper in seine Einzelteile zerfällt.

Zur Erhöhung der Stabilität der Knotenpunktverbindung können der Lagernutquerschnitt und der Kupplungsteilquerschnitt zweckmäßig mehreckig sein, wobei vorteilhafterweise alle mehrkantigen Lagernuten unabhängig von ihrer Länge mit einem gleichdimensionierten Fräswerkzeug hergestellt sein können, durch dessen Lage und Bewegung die Fräsnuten in den einzelnen Knotenkörperscheiben so geschaffen werden, daß sie alle Lagernuten mit einem einheitlichen, an die Kupplungsköpfe angepaßten Querschnitt ergeben. Die an den Querschnitt der Lagernut angepaßten Kupplungsteile können unterschiedliche Breiten haben und vorteilhafterweise als Mehrkant-Ringsektoren ausgebildet sein, die sich einem gekrümmten Verlauf einer Lagernut anpassen. Die Kupplungsteile können zu ihrer Verbindung mit einem beliebigen Gebäudeteil, einem Gerüststeg oder einem Gerüstrohr in an sich bekannter Weise mit einem Gewindesockel oder mit einem Verankerungsteil, der mit mindestens einer umlaufenden Haltenut zum Einbördeln von Wandungen versehen ist, gekoppelt sein. Dabei kann diese Koppelung auch gelenkig erfolgen, so daß der Kupplungsteil gegenüber seinem Verankerungsteil eine unterschiedliche Winkelstellung einnehmen kann.

Nachfolgend werden Ausführungsbeispiele erfindungsgemäß ausgebildeter Knotenpunktverbindungen anhand der beiliegenden Zeichnungen näher erläutert.

Im einzelnen zeigen:
- Fig. 1: eine Draufsicht auf eine erste Ausführungsform eines Knotenkörpers der Knotenpunktverbindung;
- Fig. 2: einen zentralen Längsschnitt durch den Knotenkörper entlang der Linie II-II in Fig. 1;
- Fig. 3: eine Draufsicht auf eine zweite Ausführungsform eines Knotenkörpers der Knotenpunktverbindung;
- Fig. 4: einen zentralen Längsschnitt durch den Knotenkörper entlang der Linie IV-IV in Fig. 3;
- Fig. 5: einen zentralen Längsschnitt durch einen Knotenkörper nach Fig. 1 und 2 bei gelockerter Schraubverbindung und mit eingesetzten Kupplungsteilen;
- Fig. 6: eine der Fig. 5 entsprechende Darstellung mit eingesetzten Kupplungsteilen, deren Verankerungsteile sich von denjenigen der Kupplungsteile nach Fig. 5 unterscheiden;
- Fig. 7: eine Draufsicht auf die in Fig. 6 dargestellte Knotenpunktverbindung in Richtung des Pfeiles VII in Fig. 6;
- Fig. 8: eine der Fig. 7 entsprechende Draufsicht auf eine Knotenpunktverbindung mit anders dimensionierten Kupplungsteilen;
- Fig. 9a, 9b 10a,10b 11a,11b: drei Kupplungsteile in Draufsicht und Seitenansicht, die sich durch unterschiedliche Verankerungsteile voneinander unterscheiden;
- Fig. 12a,b,c: ein Kupplungsteil mit einem Gewindesockel, eingeschraubt in ein Gerüstrohr, in Vorderansicht, Seitenansicht und im Längsschnitt;
- Fig. 13a,b,c: den Fig. 12 entsprechende Darstellungen eines in ein Gerüstrohr eingebördelten Kupplungsteiles;
- Fig. 14: einen Längsschnitt durch ein Kupplungsteil, das gegenüber seinem Gewindesockel abgewinkelt ist;
- Fig. 15: einen Längsschnitt durch ein Kupplungsteil, das mit seinem Verankerungsteil gelenkig verbunden ist;
- Fig. 16: eine Seitenansicht einer Doppelknotenpunktverbindung; teilweise im Schnitt;
- Fig. 17: die Vorderansicht eines bei der Doppelknotenpunktverbindung nach Fig. 16 verwendeten Kupplungsteiles;
- Fig. 18: das in Fig. 17 dargestellte Kupplungsteil in Seitenansicht.

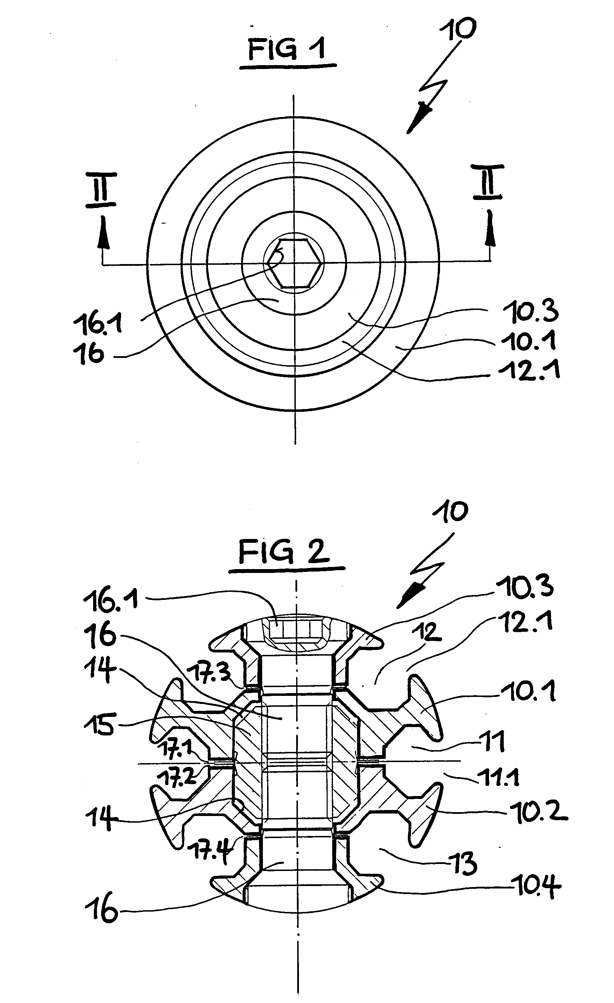

Die Fig. 1, 2 und 5 - 8 zeigen einen kugelförmigen Knotenkörper 10 einer Knotenpunktverbindung, der aus vier Knotenkörperscheiben zusammengesetzt ist, und zwar aus zwei gleichen inneren Knotenkörperscheiben 10.1 und 10.2 und zwei gleichen äußeren Knotenkörperscheiben 10.3 und 10.4. Die vier Knotenkörperscheiben 10.1-10.4 begrenzen jeweils paarweise drei parallel zueinander verlaufende endlose Lagernuten 11, 12 und 13, die alle den gleichen mehreckigen Querschnitt und eine verengte Nutöffnung 11.1, 12.1 und 13.1 aufweisen.

Die beiden inneren Knotenkörperscheiben 10.1 und 10.2 weisen eine zentrale Ausnehmung 14 auf, die gemeinsam zur Aufnahme eines Mutterkörpers 15 dient, der eine durchgehende Gewindebohrung aufweist. Die beiden äußeren Knotenkörperscheiben 10.3 und 10.4 weisen jeweils eine zentrale Durchgangsöffnung auf, die koaxial zu den zentralen Ausnehmungen 14 der beiden anderen Knotenkörperscheiben 10.1 und 10.2 ist und in welche jeweils eine mit einem Innensechskant 16.1 versehene und in den zentralen Mutterkörper 15 einschraubbare Verbindungsschraube 16 einsetzbar ist. Die beiden Verbindungsschrauben 16 sind von entgegengesetzten Seiten in die Gewindedurchgangsbohrung des Mutterkörpers 15 über eine größere Schraubgewindestrecke einsetzbar.

Zwischen benachbarten Knotenkörperscheiben 10.1-10.4 ist jeweils mindestens eine Ringtellerfeder 17.1, 17.2, 17.3 oder 17.4 eingesetzt, die bestrebt ist, die beiden benachbarten Knotenkörperscheiben auseinanderzudrücken. Das Schnittbild der Fig. 2 zeigt den Knotenkörper 10 im festen Verbindungszustand, in welchem durch festes Einschrauben der Verbindungsschrauben 16 in den Mutterkörper 15 alle Knotenkörperscheiben 10.1-10.4 gegeneinander gezogen und die zwischen den einzelnen Knotenkörperscheiben befindlichen Ringtellerfedern 17.1-17.4 flachgelegt sind.

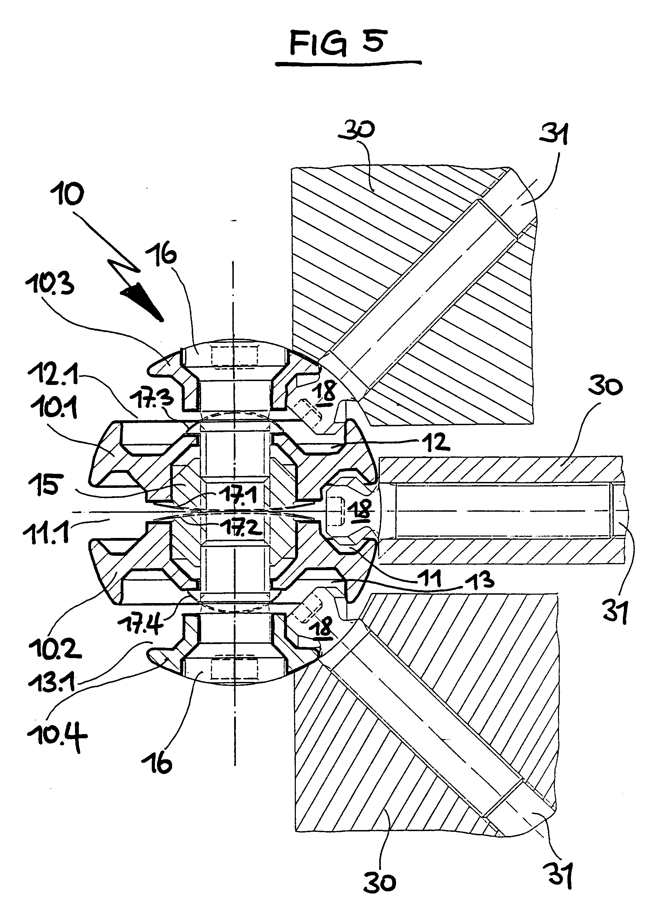

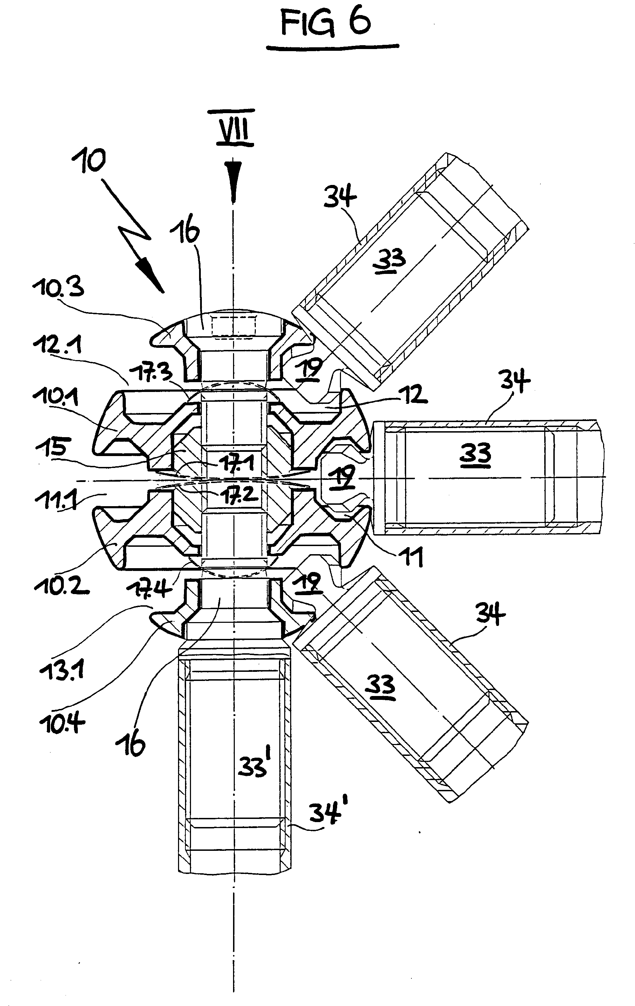

Die Schnittbilder der Fig. 5 und 6 zeigen den Knotenkörper dagegen in einem Montage-Ausgangszustand, in welchem die beiden Verbindungsschrauben 16, 16′ nur über wenige Windungen in den Mutterkörper 15 eingeschraubt sind. In diesem Zustand sind einander benachbarte Knotenkörperscheiben 10.1-10.4 durch die Ringtellerfedern 17.1-17.4 auseinandergedrückt, wodurch die Lagernutöffnungen 11.1-13.1 so stark verbreitert sind, daß die verbreiterten Kupplungsköpfe von Kupplungsteilen 18 oder 19 in die aufgeweiteten Lagernuten 11, 12 und 13 einschiebbar sind.

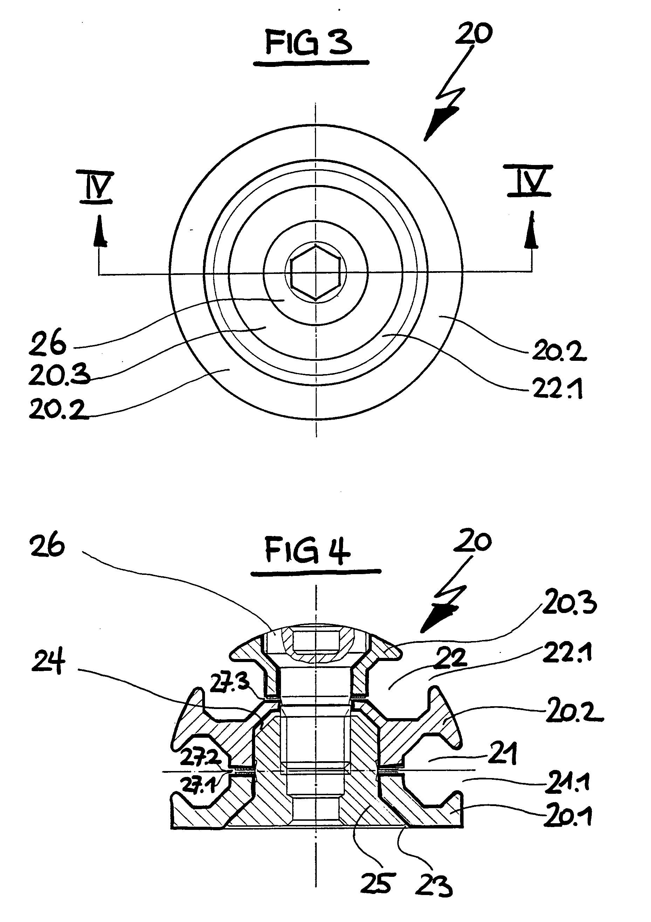

Die Fig. 3 und 4 zeigen einen nur teilkugelförmigen Knotenkörper 20, der aus drei unterschiedlichen Teilkörperscheiben 20.1, 20.2 und 20.3 zusammengesetzt ist, die jeweils paarweise zwei parallele endlose Lagernuten 21 und 22 mit verengten Nutöffnungen 21.1, 22.1 begrenzen. In zentrale Ausnehmungen 23 und 24 der beiden Knotenkörperscheiben 20.1, 20.2 ist wieder ein zentraler Mutterkörper 25 eingesetzt, in dessen Gewindebohrung sich eine Verbindungsschraube 26 einschrauben läßt, die durch eine zentrale Durchgangsöffnung der Knotenkörperscheibe 20.3 hindurchgeführt ist. Zwischen den einzelnen Knotenkörperscheiben 20.1-20.3 sind wiederum Ringtellerfedern 27.1, 27.2 und 27.3 angeordnet. Auch hier läßt sich der Knotenkörper 20 durch Lockern der Verbindungsschraube 26 in einen Montage-Ausgangszustand bringen, in welchem die Knotenkörperscheiben 20.1-20.3 unter Aufweitung der Lagernutöffnungen 21.1 und 22.1 durch die Tellerfedern 27.1-27.3 auseinandergedrückt sind. Durch ein gemeinsames Mutterteil 25 könnten zwei gleiche Knotenkörper 20 in spiegelbildlich symmetrischer Anordnung miteinander kombiniert werden und einen Knotenkörper mit vier endlosen Lagernuten bilden.

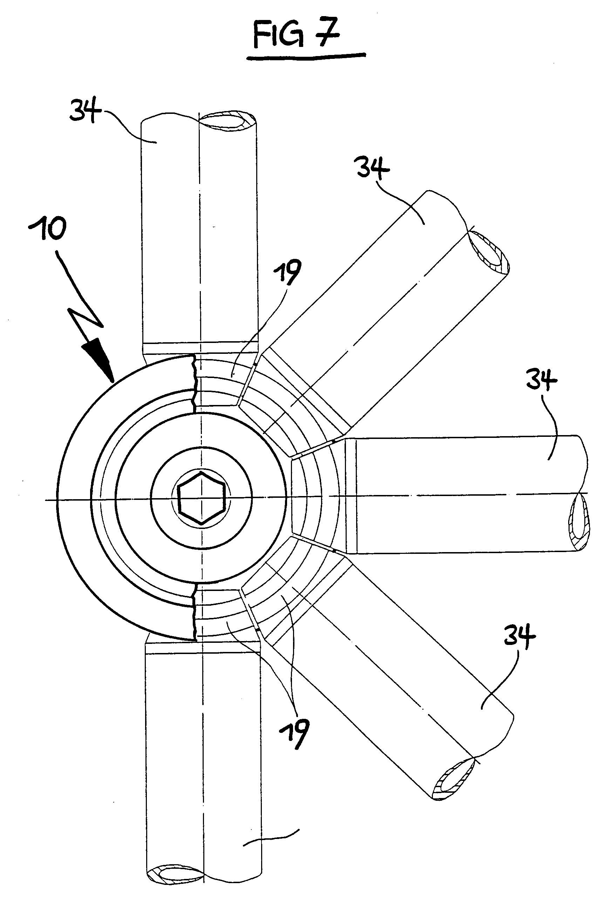

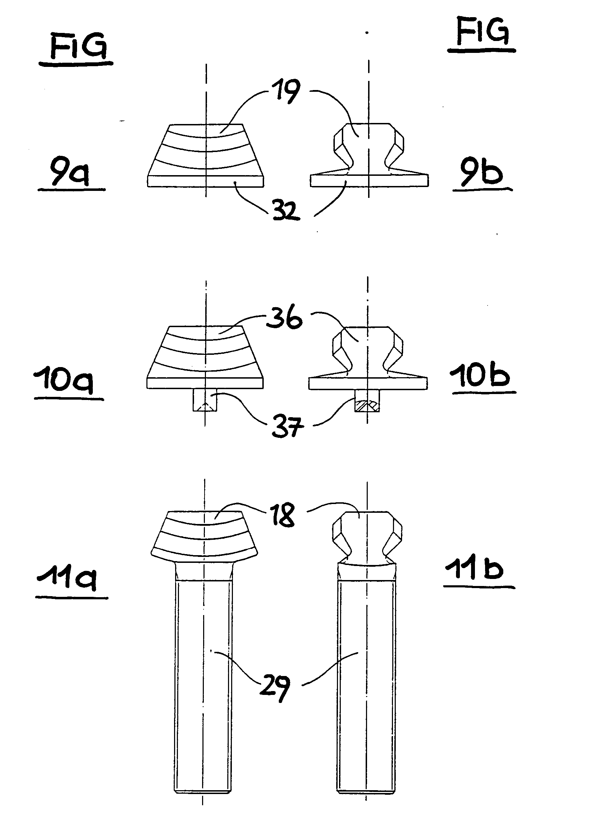

Die mit den Knotenkörpern 10, 20 zusammenwirkenden Kupplungsteile weisen alle einen Kupplungskopf auf, dessen Querschnitt an den mehreckigen Querschnitt der Lagernuten 11-13 oder 21, 22 der Knotenkörper 10 oder 20 angepaßt ist. Die Kupplungsteile können sich aber in der Länge ihrer Kupplungsköpfe und in der Ausbildung von Verankerungsteilen, über welche sie mit Gebäudeteilen oder Gerüstteilen verbunden sind, voneinander unterscheiden. In Fig. 5 sind Kupplungsteile 18 dargestellt, die im einzelnen aus Fig. 11a und 11b ersichtlich sind. Die Kupplungsköpfe 18 haben die Form von Mehrkant-Ringsektoren und weisen eine Länge auf, die größer ist als der größte Durchmesser ihres Querschnittes oder des Querschnittes der Lagernut, in welcher sie verankert werden. Die Länge der Kupplungsköpfe 18 erstreckt sich über einen Lagernutwinkelbereich von 40°. Die Kupplungsköpfe 18 sind mit einem Verankerungsteil in Form eines langen Gewindezapfens 29 fest verbunden, mit welchem die durch die Kupplungsköpfe 18 gebildeten Kupplungsteile gemäß Fig. 5 beispielsweise in Bohrungen 31 von beliebig gestalteten Wandungsteilen 30 eingeschraubt sein können, die mittels der Knotenkörper miteinander verbunden werden sollen. Die Kupplungsköpfe 19 der in Fig. 6 gezeigten Kupplungsteile haben die aus den Fig. 9a, 9b ersichtliche Form. Die Kupplungsköpfe enden in einer Platte 32, über welche sie gemäß Fig. 6 mit Verankerungsteilen in Form von einem Gewindesockel 33 beispielsweise durch Schweißen fest verbunden sein können. Die Gewindesockel 33 der aus Fig. 6 und 7 ersichtlichen Kupplungsteile mit ihren Kupplungsköpfen 19 sind in die Enden von Gerüstrohren 34 eingeschraubt, die hierzu mit einem Innengewinde versehen sind. Gemäß Fig. 6 ist eine der Verbindungsschrauben 16′ des Knotenkörpers 10 über einen Gewindesockel 33′ direkt mit einem Gerüstrohr 34′ verbunden, das bei der Fertigmontage des Knotenkörpers zum Eindrehen der Verbindungsschraube 16′ gedreht werden muß. Die in den Fig. 5 und 6 dargestellten Kupplungsteile können an den Knotenkörpern natürlich auch miteinander zusammen eingesetzt werden.

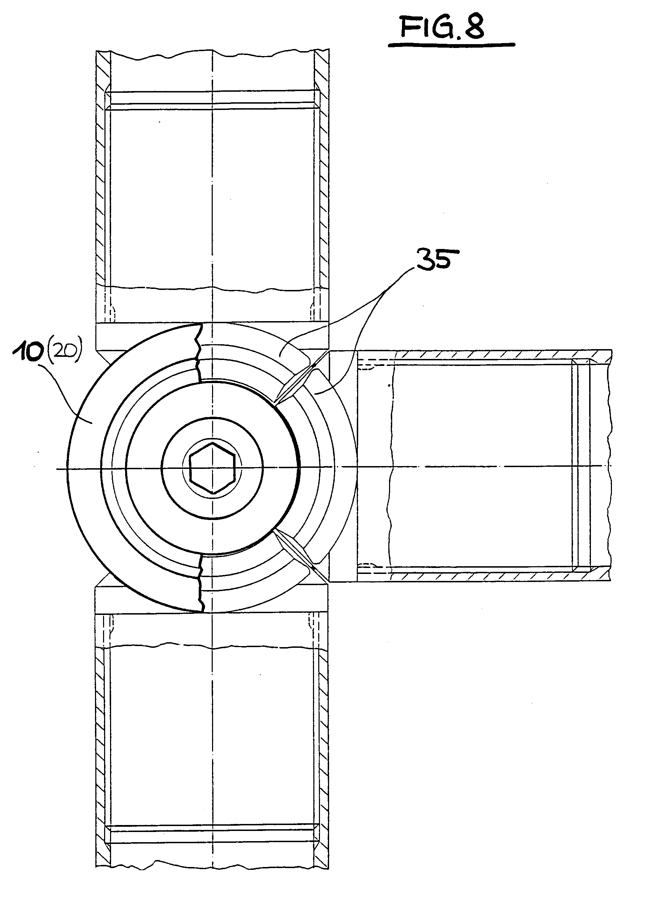

Wie aus Fig. 8 ersichtlich ist, können die Kupplungsteile mit Kupplungsköpfen 35 größerer Länge versehen sein, die eine besonders große Kraftübertragung erlauben. Hier erstrecken sich die Kupplungsköpfe 35 über einen Winkelbereich von 90°. Kleinere Kupplungskopflängen werden jedoch bevorzugt, weil sie dann in jede der unterschiedlich langen Lagernuten eines Knotenkörpers 10 oder 20 ohne Schwierigkeiten einsetzbar sind.

Die Fig. 10a und 10b zeigen einen in der Länge den Kupplungsköpfen 18 und 19 entsprechenden Kupplungskopf 36, der in einem kleinen Montagezapfen 37 endet, an welchem er in nicht dargestellter Weise in ein Gebäudeteil oder Gerüstteil eingelötet oder eingespannt werden kann.

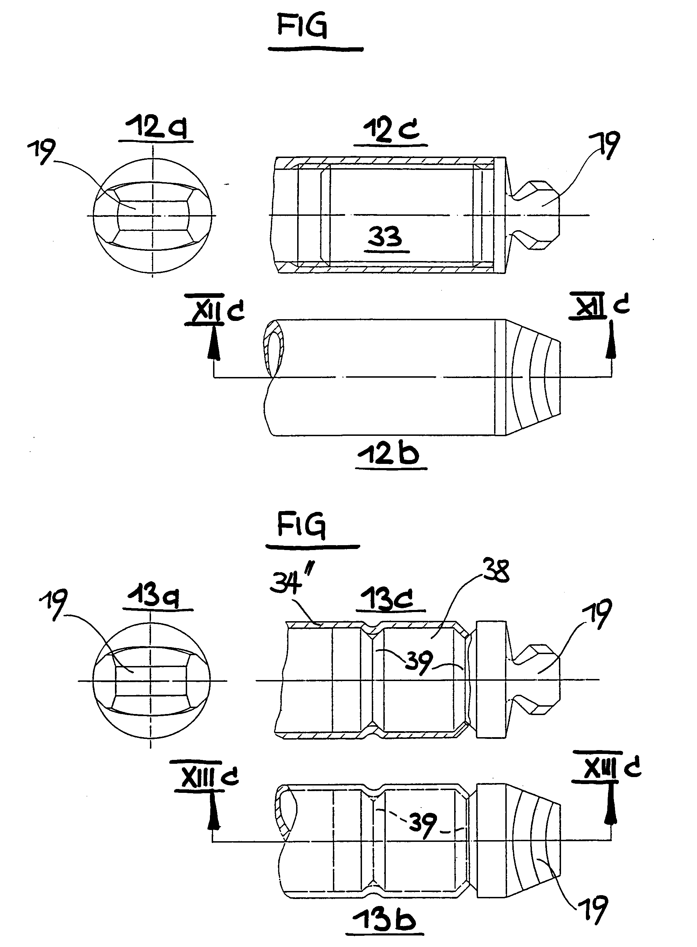

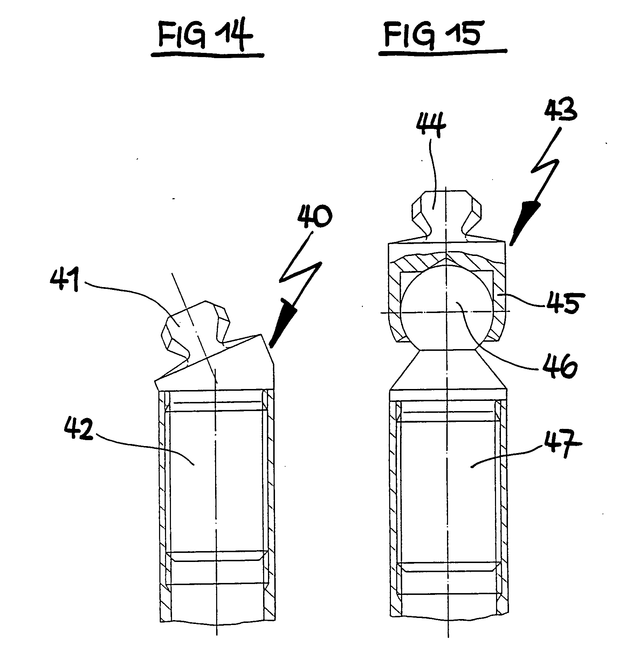

Die Fig. 12a-12c zeigen in Einzeldarstellung ein bereits aus Fig. 6 ersichtliches Kupplungsteil mit einem Kupplungskopf 19, das über einen Gewindesockel 33 in einem Gerüstrohr 34 verankert ist. Die Fig. 13a-13c zeigen ein Kupplungsteil mit einem Kupplungskopf 19, das anstelle eines Gewindesockels 33 einen gewindefreien Verankerungsbolzen 38 aufweist, der mit zwei Ringnuten 39 zum Einbördeln der Wandung eines Gerüstrohres 34˝ versehen ist.

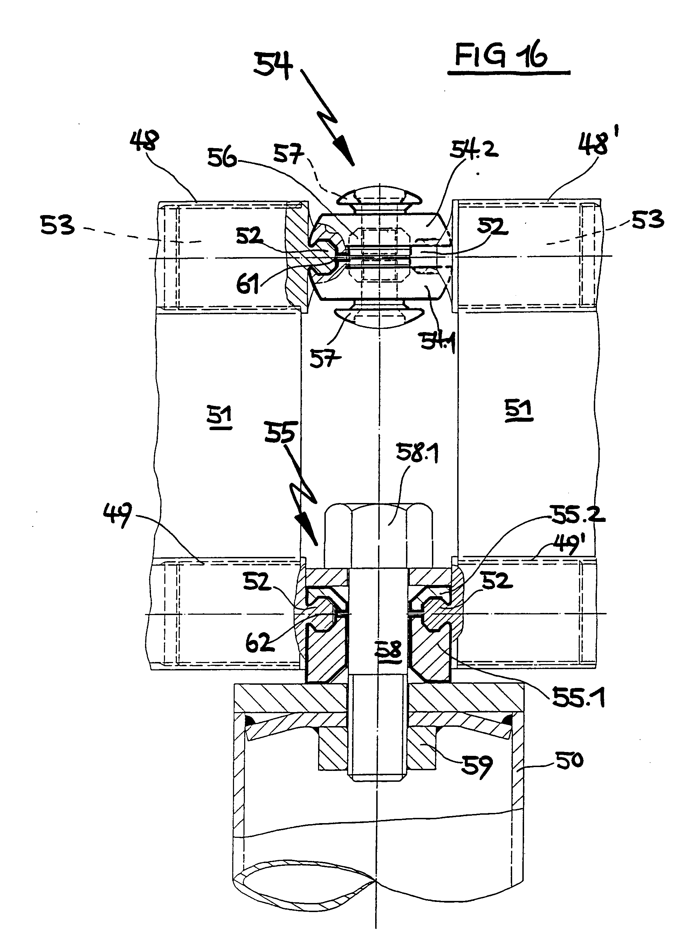

Fig. 14 zeigt ein Kupplungsteil 40, bei welchem der Kupplungskopf 41 in Schräglage mit einem Gewindesockel 42 verbunden ist. Fig. 15 zeigt ein Kupplungsteil 43, dessen Kupplungskopf 44 mit einer Lagerpfanne 45 versehen ist, die zusammen mit einem Kugelkopf 46, der mit einem Gewindesockel 47 als Verankerungselement verbunden ist, ein Kugelgelenk bildet.

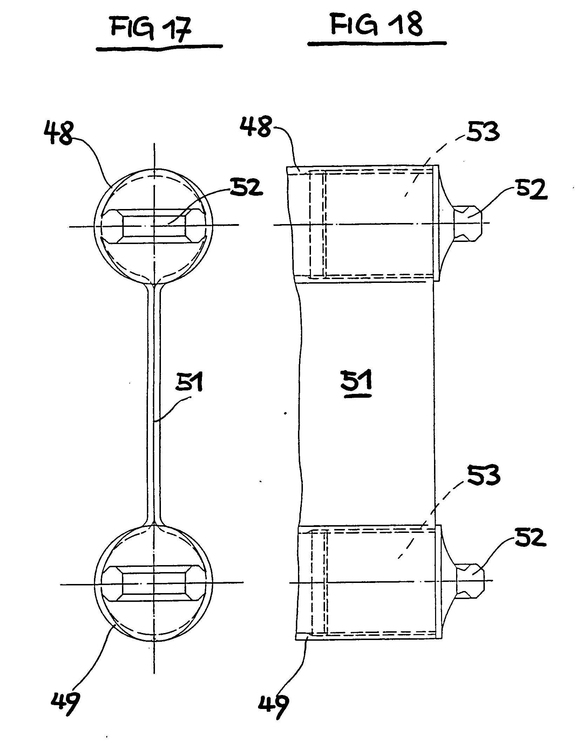

Knotenkörper und Kupplungsteile lassen sich unter Beibehaltung der erfindungswesentlichen Merkmale auf verschiedene Art abwandeln und besonderen Anwendungserfordernissen anpassen. Die Fig. 16 bis 18 zeigen ein solches Sonderbeispiel. Dort sollen mit Abstand parallel zueinander verlaufende, z.B. horizontale Tragrohre 48, 49; 48′, 49′ mit einer z.B. vertikalen Tragsäule 50 lösbar verbunden werden. Die beiden horizontalen Tragrohre 48, 49 und 48′, 49′ sind mittels Distanzstegen 51, 51′ oder auch durchgehender Distanzwandungen im gegenseitigen Abstand voneinander gehalten. In die Enden der Tragrohre 48, 49, 48′, 49′ sind Kupplungsköpfe 52 wieder mittels Gewindesockeln 53 verankert. Es sind zwei Knotenkörper 54 und 55 vorgesehen, von denen der in Fig. 16 obere Knotenkörper 54 aus nur zwei Knotenkörperscheiben 54.1 und 54.2 besteht, die den Knotenkörperscheiben 10.1 und 10.2 entsprechen können. In ihnen ist wie bei den bereits beschriebenen Knotenkörpern 10, 20 ein zentraler Mutterkörper 56 angeordnet, in welchem zwei Verbindungsschrauben 57 zum Zusammenhalten der beiden Knotenkörperscheiben verankert sind. Die Verbindungsschrauben 57 können den Verbindungsschrauben 16 entsprechen. In der durch die beiden Knotenkörperscheiben 54.1 und 54.2 begrenzten Lagernut sind die Kupplungsköpfe 52 verankert.

Der Knotenkörper 55 weist ebenfalls nur eine einzige Lagernut auf, die durch zwei hier unterschiedliche Knotenkörperscheiben 55.1 und 55.2 begrenzt ist und die Kupplungsköpfe 52 aufnimmt. Beide Knotenkörperscheiben 55.1 und 55.2 sind mittels einer einzigen Befestigungsschraube 58, die durch zentrale Durchgangsbohrungen beider Knotenkörperscheiben 55.1, 55.2 hindurchgeführt ist und die in eine in der Tragsäule 50 verankerte Mutter 59 einschraubbar ist, auf der Tragsäule 50 befestigt und dabei gleichzeitig fest miteinander verbunden. Zwischen dem Kopf 58.1 der Verbindungsschraube 58 und der oberen Knotenkörperscheibe 55.2 ist eine Zwischenscheibe 60 angeordnet. Es versteht sich, daß bei beiden Knotenkörpern 54 und 55 zwischen den beiden Knotenkörperscheiben wieder Ringtellerfedern 61 und 62 angeordnet sind, die bei gelockerten Verbindungsschrauben 57 oder 58 die Lagernuten der Knotenkörper aufspreizen.

## Patentansprüche

1. Knotenpunktverbindung für mit Kupplungsköpfen versehene, leicht montierbare und demontierbare Gebäudeteile, beispielsweise Messebauten, mit einem Knotenkörper, der mindestens eine Lagernut mit einer verengten Öffnung aufweist, die teils in der einen und teils in der anderen von zwei mittels Schrauborganen miteinander verbindbaren Knotenkörperscheiben ausgebildet ist, wobei die in die Lagernut einsetzbaren und darin formschlüssig haltbaren Kupplungsköpfe ein an den Lagernutquerschnitt angepaßtes Profil aufweisen, dadurch gekennzeichnet, daß zwischen den einzelnen Knotenkörperscheiben (10.1-10.4; 20.1, 20.2; 54.1, 54.2; 55.1, 55.2) Spreizfedern (17.1-17.4; 27.1-27.3; 61; 62) angeordnet sind, die beim Lockern der Schraubverbindung benachbarte Knotenkörperscheiben unter Aufweitung der von ihnen begrenzten Lagernut oder -nuten (11-13; 21, 22) auseinanderdrücken und ein Einschieben der die formschlüssige Verbindung bewirkenden Kupplungsköpfe (18, 19, 36, 41, 44, 52) der Kupplungsteile erlauben.

2. Knotenpunktverbindung nach Anspruch 1, dadurch gekennzeichnet, daß die Schraubverbindung einen Mutterkörper (15; 25; 56) aufweist, der in einer zentralen Ausnehmung (14, 24) von mindestens zwei benachbarten Knotenkörperscheiben (10.1, 10.2; 20.1, 20.2) angeordnet ist und in welchem mindestens eine Verbindungsschraube (16; 26; 57) zum Zusammenhalten von mindestens zwei Knotenkörperscheiben verankerbar ist.

3. Knotenpunktverbindung nach Anspruch 1 oder 2, dadurch gekennzeichnet, daß die Kupplungsköpfe (18, 19, 35, 36, 52) in der Lagernutumfangsrichtung eine Länge haben, die größer ist als der größte Durchmesser des Lagernutquerschnittes.

4. Knotenpunktverbindung nach einem der Ansprüche 1 bis 3, dadurch gekennzeichnet, daß der Lagernutquerschnitt und der Kupplungsteilquerschnitt mehreckig sind.

5. Knotenpunktverbindung nach einem der Ansprüche 1 bis 4, mit mehreren in Parallelebenen des Knotenkörpers verlaufenden Lagernuten, dadurch gekennzeichnet, daß alle mehrkantigen Lagernuten (11, 12, 13; 21, 22) unabhängig von ihrer Länge mit einem gleichdimensionierten Fräswerkzeug hergestellt sind.

6. Knotenpunktverbindung nach einem der Ansprüche 1 bis 4, dadurch gekennzeichnet, daß die Kupplungsköpfe (18, 19, 35, 36, 52) die Form von Mehrkant-Ringsektoren haben.

7. Knotenpunktverbindung nach einem der Ansprüche 1 bis 6, dadurch gekennzeichnet, daß die Kupplungsteile in an sich bekannter Weise mit einem Gewindesockel (29, 33, 53) zur Verankerung in der Öffnung eines Rohres (34, 48, 49) oder in einer Gewindebohrung (31) eines Gebäudeteiles (30) versehen sind.

8. Knotenpunktverbindung nach einem der Ansprüche 1 bis 6, dadurch gekennzeichnet, daß die Kupplungsteile einen Verankerungsteil (38) aufweisen, der mit mindestens einer umlaufenden Nut (39) zum Einbördeln von Wandungen versehen ist.

9. Knotenpunktverbindung nach einem der Ansprüche 1 bis 8, dadurch gekennzeichnet, daß der Kupplungskopf (44) des Kupplungsteiles (43) mit seinem Verankerungsteil (47) gelenkig verbunden ist.

## Claims

1. A junction point connection for building components which are easy to erect and dismantle and which are provided with coupling heads, for example building structures for fairs, with a junction body which has at least one support channel with a constricted opening which is constructed partly in one and partly in the other of two junction body discs which can be connected to each other by means of screwed elements, wherein the coupling heads, which can be inserted in the support channel and held with a positive fit therein, have a profile which is matched to the cross-section of the support channel, characterised in that bracing springs (17.1-17.4; 27.1-27.3; 61; 62) are disposed between the individual junction body discs (10.1-10.4; 20.1, 20.2; 54.1, 54.2; 55.1, 55.2), which bracing springs push adjacent junction body discs apart with a widening of the support channel or channels (11-13; 21, 22) delimited by them when the screwed connection is loosened, and permit the insertion of the coupling heads (18, 19, 36, 41, 44, 52) of the coupling components, which coupling heads effect the positive-fit connection.

2. A junction point connection according to claim 1, characterised in that the screwed connection comprises a nut body (15; 25; 56) which is disposed in a central recess (14, 24) of at least two adjacent junction body discs (10.1, 10.2; 20.1, 20.2) and in which at least one connecting bolt (16; 26; 57) can be anchored for holding together at least two junction body discs.

3. A junction point connection according to claim 1 or 2, characterised in that the length of the coupling heads (18, 19, 35, 36, 52) in the peripheral direction of the support channel is greater than the greatest diameter of the cross-section of the support channel.

4. A junction point connection according to any one of claims 1 to 3, characterised in that the cross-section of the support channel and the cross-section of the coupling component are polygonal.

5. A junction point connection according to any one of claims 1 to 4, with a plurality of support channels running in parallel planes of the junction body, characterised in that all the polygonal support channels (11, 12, 13; 21, 22) are manufactured with a cutting tool of the same dimensions, independently of their length.

6. A junction point connection according to any one of claims 1 to 4, characterised in that the coupling heads (18, 19, 35, 36, 52) are in the form of polygonal ring sectors.

7. A junction point connection according to any one of claims 1 to 6, characterised in that the coupling components are provided in the manner known in the art with a threaded base (29, 33, 53) for anchoring in the opening of a tube (34, 48, 49) or in a tapped hole (31) of a building component (30).

8. A junction point connection according to any one of claims 1 to 6, characterised in that the coupling components comprise an anchoring part (38) which is provided with at least one surrounding channel (39) for the crimped connection of tube walls.

9. A junction point connection according to any one of claims 1 to 8, characterised in that the coupling head (44) of the coupling component (43) is attached articulated to its anchoring part (47).

## Revendications

1. Noeud d'assemblage pour des parties de bâtiments facilement montables et démontables munies de têtes d'accouplement, à titre d'exemple des constructions de foire, comprenant un corps de noeud qui présente au moins une rainure d'appui avec une ouverture rétrécie, qui est ménagée en partie dans l'un et en partie dans l'autre de deux disques de corps de noeud pouvant être assemblés l'un à l'autre au moyen d'organes de vissage, les têtes d'accouplement engageables dans la rainure d'appui et pouvant être maintenues fermement dans celle-ci présentant un profil adapté à la section de la rainure d'appui, caractérisé en ce qu'entre les différents disques de corps de noeud (10.1-10.4 ; 20.1, 20.2 ; 54.1, 54.2 ; 55.1, 55.2) sont disposés des ressorts d'écartement (17.1-17.4 ; 27.1-27.3 ; 61 ; 62) qui lors du desserrage de l'assemblage par vis écartent les uns des autres les disques de corps de noeud voisins moyennant élargissement de la rainure ou des rainures d'appui (11-13 ; 21, 22) délimitées par eux et permettent une insertion des têtes d'accouplement (18, 19, 36, 41, 44, 52) des pièces d'accouplement causant l'assemblage ferme.

2. Noeud d'assemblage selon la revendication 1, caractérisé en ce que l'assemblage par vis présente un corps d'écrou (15 ; 25 ; 56), qui est disposé dans un évidement central (14, 24) d'au moins deux disques de corps de noeud voisins (10.1, 10.2 ; 20.1, 20.2) et dans lequel au moins une vis d'assemblage (16 ; 26 ; 57) peut être ancrée pour le maintien ensemble d'au moins deux disques de corps de noeud.

3. Noeud d'assemblage selon la revendication 1 ou 2, caractérisé en ce que les têtes d'accouplement (18, 19, 35, 36, 52) ont une longueur dans le sens de la circonférence de la rainure d'appui qui est plus grande que le plus grand diamètre de la section de la rainure d'appui.

4. Noeud d'assemblage selon l'une des revendications 1 à 3, caractérisé en ce que la section de la rainure d'appui et la section de la pièce d'accouplement sont à plusieurs angles.

5. Noeud d'assemblage selon l'une des revendications 1 à 4, avec plusieurs rainures d'appui situées dans des plans parallèles du corps de noeud, caractérisé en ce que toutes les rainures d'appui à plusieurs bords (11, 12, 13 ; 21, 22) sont fabriquées indépendamment de leur longueur avec un outil de fraisage de même dimension.

6. Noeud d'assemblage selon l'une des revendications 1 à 4, caractérisé en ce que les têtes d'accouplement (18, 19, 35, 36, 52) ont la forme de secteurs de cercle à plusieurs bords.

7. Noeud d'assemblage selon l'une des revendications 1 à 6, caractérisé en ce que les pièces d'accouplement sont munies d'une façon connue en soi d'une embase filetée (29, 33, 53) pour ancrage dans l'ouverture d'un tube (34, 48, 49) ou dans un perçage taraudé (31) d'une partie de bâtiment (30).

8. Noeud d'assemblage selon l'une des revendications 1 à 6, caractérisé en ce que les pièces d'accouplement présentent une partie d'ancrage (38) qui est munie d'au moins une rainure circulaire (39) pour le bridage interne de parois.

9. Noeud d'assemblage selon l'une des revendications 1 à 8, caractérisé en ce que la tête d'accouplement (44) de la pièce d'accouplement (43) est assemblée par articulation à sa partie d'ancrage (47).
